# EUROPEAN PATENT SPECIFICATION

(11) **EP 1 184 550 B1**
(45) Date of publication and mention of the grant of the patent: **26.01.2005**
(21) Application number: 01121087.9
(22) Date of filing: 03.09.2001
(51) Int. Cl.: F02B 43/10

(54) **Hydrogen fuel hose**
Wasserstoffbrennstoffleitung
Tuyau pour pompe hydrogène

(30) Priority: 04.09.2000 JP 2000266539
(43) Date of publication of application: 06.03.2002
(73) Proprietor: Tokai Rubber Industries, Ltd., Komaki-shi, Aichi-ken, 485-8550 (JP)
(72) Inventor: Nishiyama, Takahiro, Kasugai-shi, Aichi-ken 486-0903 (JP)
(74) Representative: KUHNEN & WACKER

(56) References cited:
- EP-A- 0 294 181
- EP-A- 1 010 929
- US-A- 4 559 973
- US-A- 6 074 717

## Description

### BACKGROUND OF THE INVENTION

### 1. Field of the Invention:

This invention relates to a hydrogen fuel hose. More particularly, it relates to a hose having a wall serving as an effective barrier to a highly permeant gas of hydrogen and capable of overcoming other problems peculiar to the conveying of a hydrogen fuel in a fuel-cell vehicle. It also relates to a hose which is treated prior to use so as to exhibit its characteristics as stated above effectively. It also relates to a hose connected with a stainless steel(SUS) pipe.

### 2. Description of the Related Art:

The development of a fuel-cell vehicle as a next-generation vehicle is under way since the problems such as environmental pollution and oil shortage have been spotlighted. Hydrogen gas is a typical fuel for it. Methanol, methane, etc. can also be used if a reformer is available to generate hydrogen. Hydrogen gas requires careful handling because of its high permeability and combustibility. Hydrogen gas is usually used with hot steam so that the cell may have an improved efficiency in the generation of electricity without drying quickly.

A metal pipe, typically a stainless steel one, is often used for conveying a hydrogen fuel in a fuel-cell car. The use of a metallic bellows pipe is also under study. These metal pipes, however, lack flexibility. Therefore, they cannot absorb the vibration of the compressor, nor can they absorb the vibration occurring to the cell, hydrogen tank, reformer, etc. when the car is running. They cannot be expected to absorb any impact satisfactorily as required for preventing the leakage of any hydrogen gas as a result of an accident. They cannot be expected to absorb any displacement of various parts of related equipment caused by thermal expansion, either. Some flexibility can be expected from a metallic bellows pipe. A bellows pipe is, however, required to have a wall thickness not exceeding, say, 0.5 mm to absorb various kinds of vibration as mentioned above satisfactorily. No pipe having such a small wall thickness can withstand the high pressure of hydrogen gas to be conveyed.

Other problems may occur from the fact that such a metal pipe or a metallic bellows pipe has its wall exposed directly to a gaseous mixture of hydrogen and hot steam. Firstly, it is likely that metal ions may be dissolved in water vapor and cause the pollution deterioration of the fuel-cell catalyst. The dissolution of metal ions in a very small quantity may occur and cause the pollution of the catalyst even if the pipe may be of stainless steel. Moreover, a stainless steel pipe is expensive. Secondly, the diffusion of hydrogen gas through the wall of the pipe may cause its embrittlement. Thirdly, the electric conductivity of the pipe may obstruct the electrical insulation of the fuel cell and cause a leakage of electricity therefrom.

### SUMMARY OF THE INVENTION

It is an object of this invention to provide a hydrogen fuel hose having a wall serving as an effective hydrogen gas barrier and overcoming three problems occurring peculiarly from the conveying of a hydrogen fuel in a fuel-cell vehicle: (1) the dissolution of metal ions causing the deterioration of the fuel-cell catalyst by pollution, (2) the diffusion of hydrogen gas causing the embrittlement of a metal wall, and (3) any factor obstructing the electrical insulation of the fuel cell. It is another object to provide a flexible hose for conveying a hydrogen fuel.

According to a first aspect of this invention, there is provided a hose of a multilayer wall for conveying a hydrogen fuel in a fuel-cell vehicle, the hose comprising an innermost layer of a rubber material cured by an agent not containing any metal oxide and sulfur, and a hydrogen gas-impermeable metallic barrier layer formed in the wall surrounding the innermost layer.

The hose of the first aspect having the metallic barrier layer ensures the high hydrogen gas impermeability of the wall. The innermost layer of rubber keeps the metallic barrier layer from direct exposure to a gaseous mixture of hydrogen and hot steam. Therefore, there is no embrittlement of the metal in the metallic barrier layer by the diffusion of hydrogen gas therethrough, nor is there any dissolution of metal ions causing the pollution of the fuel-cell catalyst. Although similar results can be expected from an innermost layer of a resin, there is obtained a hose of low flexibility failing to make a tight seal in its joint with a pipe. No sulfur or metal ion causing the pollution of the fuel-cell catalyst is dissolved from the rubber layer, since the agent used for curing it does not contain any metal oxide and no sulfur.

By the way such hoses, wherin the inner layer is cured without any sulfur are known from US-A-6B 74 717. These hose, however are cured with zinc oxide.

According to a second aspect, the rubber material of the innermost layer satisfies at least one of the following requirements:
(1) hot water resistance;
(2) acid and/or alkali resistance; and
(3) an electric resistance of at least 10⁶ Ω · cm.

A rubber material having hot water resistance prevents a rubber layer from deterioration by the heat of hot steam flowing through the hose. A layer of rubber having acid and/or alkali resistance prevents deterioration by acidic or alkaline steam. As a result, the rubber layer makes it possible to prevent any diffusion of water or hydrogen gas through the metallic barrier layer which may cause the dissolution of metal ions or the embrittlement of the layer. If the rubber layer has a high electric resistance, there is no fear that the conductivity of the hose may obstruct the electrical insulation of the fuel cell.

According to a third aspect, the rubber material of the innermost layer is preferably ethylene-propylene-diene terpolymer rubber (EPDM), ethylene-propylene copolymer rubber (EPM), silicone-modified EPDM or EPM, fluororubber (FKM), or butyl rubber. All of these rubber materials are preferred for their high flexibility, hot water resistance, and acid or alkali resistance.

According to a fourth aspect, the rubber material is more preferably EPDM or EPM cured by a peroxide without relying upon any zinc oxide.

According to a fifth aspect, the metallic barrier layer is a metal laminated layer formed by having a metal foil held between two resin films. It is sufficient for the foil to have a very small thickness to provide an effective hydrogen gas barrier, since it is protected by the resin films. The metallic barrier layer is, therefore, highly flexible and accordingly, the hose according to this invention is satisfactorily flexible for absorbing any vibration and impact as required. Even if some hydrogen gas or steam may pass through the rubber layer, the adjoining resin film shuts off any such hydrogen gas or steam from reaching the metal foil, thereby preventing any dissolution of metal ions, or any embrittlement of the barrier layer by hydrogen.

According to a sixth aspect, the metal laminated layer is formed by at least a single fold of spiral winding or longitudinal lapping of a tape of a laminated sheet formed by having a metal foil held between two resin films. Spiral winding means winding such a tape spirally about a core to form a cylindrical shape, while longitudinal lapping means applying such a tape longitudinally of a core and curving it along its width to form a cylindrical shape. Such a way of spiral winding or longitudinal lapping facilitates the quick formation of the metal laminated layer. A single fold of winding or lapping is easier to make and gives a more flexible hose, while two or more folds make a still more effective hydrogen gas barrier.

According to a seventh aspect, the multilayer wall has at least one of the following features:
(a) the metallic barrier layer is in contact with the innermost rubber layer;
(b) the metallic barrier layer forms a part of the wall surrounding the innermost rubber layer and is surrounded by a fiber-reinforced layer;
(c) the wall sequentially comprises the innermost rubber layer, the metallic barrier layer, an intermediate rubber layer, a fiber-reinforced layer and an outer rubber layer; and
(d) the innermost rubber and metallic barrier layers, or every two adjoining layers in the case of (b) or (c) above, are bonded to each other with an adhesive strength of at least 5 kgf/inch.

The feature (a) gives a lightweight and flexible hose of the simplest construction. The fiber-reinforced layer (b) effectively supports the rubber and metallic layers against any pressure bearing thereupon and also protects them from any external impact. The feature (c) is more preferable, and the feature (d) is still more preferable.

According to an eighth aspect, the intermediate rubber layer is of butyl rubber (IIR). As butyl rubber is hardly permeable to hydrogen gas, the intermediate rubber layer protects the metallic barrier layer effectively and also improves the hydrogen gas impermeability of the whole hose to a further extent.

According to a ninth aspect, the outer rubber layer is of a material having an electric resistance of at least 10⁶ Ω · cm. The layer of such a material ensures that the conductivity of the hose be low enough not to affect the electrical insulation of the fuel cell adversely, while it protects the hose from any external impact, or chemical attack.

According to a tenth aspect, the hose as a whole has an electric resistance of at least 10⁶ Ω · cm to ensure the electrical insulation of the fuel cell.

According to an eleventh aspect of this invention, the hose is filled with an extraction medium and treated under heat aging conditions prior to use so that any undesirable matter may be extracted from the inner wall of the hose. Impurities, such as sulfur, metals or metal oxides, which the innermost rubber layer may contain in very small quantities, can be removed effectively so as not to be dissolved away from the wall of the hose actually in use.

According to a twelfth aspect, the hose has its ends each connected with a stainless steel pipe, the inner wall surface being treated for adhesion to the outer surface of the pipe, and the inner and outer surfaces being fastened by a sleeve. Each end of the hose provides a pipe joint which is simple in construction and forms a tight seal against hydrogen gas. There is hardly any dissolution of metal ions from the inner wall surface of the stainless steel pipe.

The above and other advantages of this invention will become more apparent from the following description and the accompanying drawing.

### BRIEF DESCRIPTION OF THE DRAWING

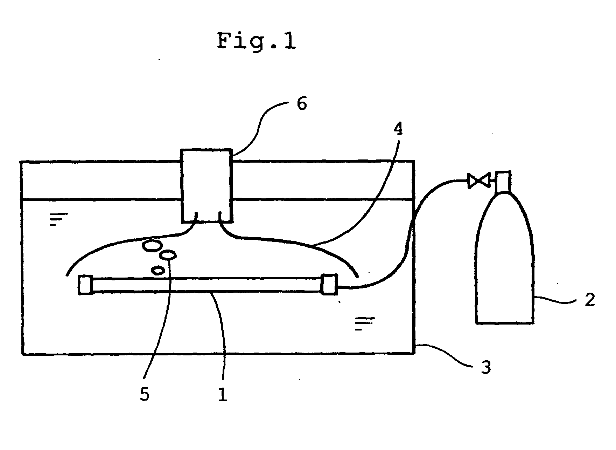

Fig. 1 is a schematic diagram illustrating a method employed for testing hoses for gas permeability.

### DETAILED DESCRIPTION OF THE INVENTION

### [Hydrogen Fuel Hose]

The hose according to this invention is a hose of the multilayer wall construction used for conveying a hydrogen fuel in a fuel-cell vehicle. It may be a smooth or straight hose, or a curved hose, or may have a portion like bellows. Its multilayer wall is composed of at least an innermost rubber layer and a metallic barrier layer formed in the wall surrounding it. The innermost rubber layer is of a rubber material cured by an agent which is free of any metal oxide and sulfur, and the metallic barrier layer is impermeable to hydrogen gas.

The metallic barrier layer preferably contacts the innermost rubber layer. It may alternatively form a part of the wall surrounding the innermost rubber layer and be surrounded by a fiber-reinforced layer. The multilayer wall may alternatively be composed of an innermost rubber layer, a metallic barrier layer, an intermediate rubber layer, a fiber-reinforced layer and an outer rubber layer. The innermost rubber and metallic barrier layers, or every two adjoining layers are preferably bonded to each other with an adhesive strength of at least 5 kgf/inch. Any known and appropriate adhesive, or treatment may be employed for bonding those layers to each other.

The hose preferably has an electric resistance of at least 10⁶ Ω · cm, and more preferably at least 10⁸ Ω · cm as a whole. Such an electric resistance can be realized if the innermost or outer rubber layer is formed from a material having a correspondingly high electric resistance. The electric resistance of the hose as a whole can be measured by applying a predetermined voltage across its ends each fitted, or not fitted with a clinching metal fixture.

The hose may be of any desired size. It preferably has an inside diameter of, say, 5 to 50 mm to allow gas to flow in as large a quantity as possible. While its pressure resistance may be selected as desired, it preferably has a level of, say, 1.5 MPa to allow a large amount of hydrogen gas to flow at a high pressure.

### [Innermost Rubber Layer]

The innermost rubber layer is formed from a material cured by an agent not containing any metal oxide, such as zinc oxide, nor any sulfur. It may be any kind of rubber if it is curable by an agent not containing any metal oxide, or sulfur. It is undesirable to use any rubber containing a large amount of metal compound, or sulfur even for any purpose other than curing.

The treatment of the hose prior to use is preferred to ensure that no uncertain matter be dissolved from its innermost rubber layer after the hose is connected. More specifically, the hose is filled with an extraction medium (e.g. pure water) and treated under specific heat aging conditions, so that any such matter may be removed by extraction prior to use or piping.

The layer is preferably of a material having hot water resistance, or more specifically resisting deterioration by hot water having a temperature of 120 °C. Another preferred material has acid and/or alkali resistance. Still another preferred material has an electric resistance of at least 10⁶ Ω · cm, and more preferably at least 10⁸ Ω · cm. More specific examples of materials are EPDM, EPM, silicone-modified EPDM or EPM, FKM and butyl rubber. Examples of butyl rubber include butyl rubber (IIR), and halogenated butyl rubber, such as brominated butyl rubber (Br-IIR) or chlorinated butyl rubber (Cl-IIR). EPDM or EPM cured by a peroxide without relying upon zinc oxide is, among others, preferred.

Moreover, the innermost rubber layer preferably has a hardness of 50 to 80 (IRHD) and a thickness of at least 0.2 mm.

### [Metallic Barrier Layer]

The metallic barrier layer is not particularly limited in construction, but may be formed even by a metal pipe with or without a bellows portion if no flexibility is required. It is, however, preferably formed as a metal laminated layer formed by having a metal foil held between two resin films.

Although the foil may be of any metal, it is preferably of aluminum, stainless steel(SUS), titanium, etc. as they are excellent in at least one of fluid impermeability, ductility and deformation adaptability. Aluminum or stainless steel is, among others, preferred. Although the thickness of the foil is not limited, the foil preferably has a thickness of at least 5 µm, and more preferably, say, 7 to 50 µm to provide a good fluid barrier, while ensuring that the hose be satisfactorily flexible. Although the thickness of the resin film is not limited, each resin film preferably has a thickness of, say, 5 to 200 µm. The resin films are preferably of polyamide (PA), polyethylene terephthalate (PET), polyethylene (PE), polypropylene (PP), an ethylene-vinyl alcohol copolymer (EVOH) , or polyphenylene sulfide (PPS). Polyamides are, among others, preferred as they have a good balance of properties including heat resistance.

The metal laminated layer may be formed by any method if it can form a tight layer. It is, however, preferably formed by spiral winding or longitudinal lapping of a tape of a laminated sheet prepared by having a metal foil held between two resin films, so that a tightly sealed layer may be formed rapidly. The laminated sheet is preferably so wound that one portion thereof may have an edge overlapping that of another to ensure an effective seal. Every two adjoining overlapping portions are preferably bonded to each other with an adhesive. Such bonding is also preferable to ensure that the layer retains its cylindrical shape.

### [Intermediate Rubber Layer, Fiber-Reinforced Layer and Outer Rubber Layer]

The intermediate rubber layer may be of any rubber that may be suitable from the standpoints of fluid impermeability, flexibility, cost and adhesiveness to any adjoining layer. Butyl rubber (IIR) is, however, preferred for its high impermeability to hydrogen gas.

The fiber-reinforced layer may be of any known type and material, including PET, vinylon, rayon, aramid and nylon yarns. The end count of the reinforcing yarns and the angle of their braiding are preferably selected to ensure the formation of a layer having e.g. a satisfactorily high pressure resistance.

Although the material of the outer rubber layer is not limited, it is preferably formed from EPDM, an allyl glycidyl ether-ethylene-epichlorohydrin terpolymer (GECO), chlorosulfonated polyethylene rubber (CSM) or acrylic rubber (ACM). All of these rubbers are preferred for their weatherability, ozone resistance, heat resistance and flexibility. Moreover, the outer rubber layer is preferably of a material having an electric resistance of at least 10⁶ Ω · cm, and more preferably at least 10⁸ Ω · cm.

### [Connection of Hose]

At the end of the hose where it is connected with a pipe, the hose (or its innermost rubber layer) preferably has its inner wall surface adhered to the outer wall surface of the pipe, and more preferably has its end clinched by an appropriate fitting. The pipe is preferably of stainless steel (SUS) and has its outer wall surface coated with, or dipped in an adhesive. A stainless steel sleeve is preferably used as the clinching fitting, though a fitting of another metal, such as aluminum or iron, or a fitting plated with such a metal is equally useful.

### EXAMPLES

### [Preparation of Hoses]

Hoses according to Examples 1 and 2 embodying this invention and Comparative examples 1 and 2 were prepared as shown in Table 1. Each hose had its innermost wall layer formed from the material shown in Table 1. Each hose (or the smooth portion of the hose according to Comparative Example 2) had an inside diameter of 15 mm, and was otherwise as described below. Every two adjoining wall layers, if any, were bonded to each other with an adhesive.

### EXAMPLE 1

The hose had an innermost wall layer of rubber formed from EPDM cured by a peroxide without zinc oxide, and having a thickness of 1.2 mm. The innermost rubber layer was surrounded by a laminated layer formed from a laminated sheet having an aluminum foil held between two polyamide films, an intermediate rubber layer formed from IIR and having a thickness of 0.5 mm, a reinforcing layer formed by winding PET yarn spirally in a common way, and finally an outer rubber layer formed from EPDM and having a thickness of 1.0 mm.

### EXAMPLE 2

The hose had an innermost wall layer of rubber formed from FKM cured by a peroxide, and having a thickness of 1.2 mm. Its wall was otherwise identical in construction to that of the hose according to Example 1.

### COMPARATIVE EXAMPLE 1

The hose had an innermost wall layer of rubber formed from EPDM cured by sulfur, and having a thickness of 1.2 mm. Its wall was otherwise identical in construction to that of the hose according to Example 1.

### COMPARATIVE EXAMPLE 2

The hose was a stainless steel(SUS) bellows pipe having a wall thickness of 1.0 mm.

### [Evaluation of Hoses]

Each hose was evaluated for various properties or characteristics as stated below. The results are shown in Table 1. In Table 1, each Circle(O) or "OK" indicates that the results were more than expected, and each Double Circle (ⓞ) indicates that the results were by far more than expected, while each x or "NG" indicates that the results were not what had been expected. Table 1 also includes the evaluation of each hose for its cost.

### Flexibility:

An attempt was made to wind each hose about a mandrel having a diameter of 300 mm. The ⓞ indicates that the hose was easy to wind thereon, and each ○ indicates that the hose could be wound, while the x indicates that the hose could not be wound.

### Permeability:

Referring to Fig. 1, each hose 1 closed at one end was connected at the other end to a bottle 2 containing helium gas (as a substitute for hydrogen gas) maintained at a pressure of 1 MPa, and was left to stand for a week in a bath of water immediately under a hood 4 in a tank 3 maintaining the water at a temperature of 80°C. Then, bubbles 5 of helium gas leaving the hose 1 through its wall were all collected in a cylinder 6 for three days, and the total amount thereof was determined. It was used for calculating the amount of helium gas diffused per meter of hose length per hour. In Table 1, each "OK" indicates that the amount did not exceed 5 ml/m/h, while the "NG" indicates that it exceeded 5 ml/m/h.

### Hydrogen Resistance:

Each hose was filled with hydrogen gas having a pressure of 0.9 MPa, was left to stand at room temperature for 168 hours, and was thereafter examined for any change in flexibility or other physical properties. Examination was made of each hose (or the innermost rubber layer of the hose according to Example 1 or 2 or Comparative Example 1, and a bellows pipe of Comparative Example 2) to see if there had not occurred any hardening or softening, or any marked reduction in sealing property, pressure resistance or adhesive strength.

### Steam Resistance:

Each hose was filled with pure water, was left to stand at a temperature of 120 °C for 168 hours, and was thereafter examined for any change in flexibility and other physical properties. Examination was made as explained under Hydrogen Resistance.

### Acid Resistance:

Each hose was filled with an aqueous solution of acetic acid having a concentration of 33%, was left to stand at a temperature of 120 °C for 168 hours, and was thereafter examined for any change in flexibility and other physical properties. Examination was made as explained under Hydrogen Resistance.

### Alkali Resistance:

Each hose was filled with an aqueous solution of ammonia having a concentration of 10%, was left to stand at a temperature of 120°C for 168 hours, and was thereafter examined for any change in flexibility and other physical properties. Examination was made as explained under Hydrogen Resistance.

### Extract Analysis:

Each hose was filled with ultrapure water, and left to stand at a temperature of 120 °C for 168 hours. Then, the water was removed from the hose, and analyzed for any extract. The hose was concluded as "OK" when the water had a total extract content not exceeding 1% by weight, and contained not more than 1 ppm of metal ion, halogen or sulfur.

### Electric Resistance:

Each hose had its innermost and outermost wall layers examined for their volume specific resistances in accordance with the JIS K 6911 method. The layers were concluded as "OK" when they showed a value of at least 10⁶ Ω · cm. Each hose (or the bellows pipe according to Comparative Example 2) had its volume specific resistance examined as a whole by having a voltage of 500 V applied across both ends thereof each fitted with a stainless steel sleeve. The hose was concluded as "OK" when it showed a value of at least 10⁶ Ω · cm.

### Pressure Resistance:

Each hose was closed at one end, and connected at the other end with a hydraulic pump, and a water pressure of 3 MPa was applied to the hose. The hose was concluded as "OK" when there was no leakage of water from it, or any rupture thereof.

### Heat Resistance:

Each hose was subjected to 168 hours of heat treatment at 120 °C, was closed at one end, and was connected at the other end with a hydraulic pump, and a water pressure of 3 MPa was applied to the hose. The hose was concluded as "OK" when there was no leakage of water from it, or any rupture thereof.

### Adhesive Strength:

Each hose was subjected to 168 hours of heat treatment at 120 °C, and its adhesive strength between every two adjoining wall layers was measured by a customary method. The hose was concluded as "OK" when every two adjoining wall layers thereof showed an adhesive strength of at least 5 kgf/inch.

**Table 1**

| | | Example 1 | Example 2 | Comparative Example 1 | Comparative Example 2 |
|---|---|---|---|---|---|
| Construction | Innermost layer | EPDM cured by peroxide (without ZnO) | Ternary FKM cured by peroxide | EPDM cured by sulfur | Stainless steel bellows pipe |
| | Barrier layer | PP/AI/PP | PA/AI/PA | - | - |
| Properties | Flexibility | ○ | ○ | ⓞ | × |
| | Permeability | OK | OK | NG | OK |
| | Pressure resistance | OK | OK | OK | OK |
| | Heat resistance | OK | OK | OK | OK |
| | Hydrogen resistance | OK | OK | OK | OK |
| | Steam resistance | OK | OK | OK | OK |
| | Acid resistance | OK | OK | OK | OK |
| | Alkali resistance | OK | OK | OK | OK |
| | Extract analysis | OK | OK | NG | OK |
| | Electric resistance | OK | OK | OK | NG |
| | Adhesive strength | OK | OK | OK | OK |
| Cost | | ○ | ○ | ⓞ | × |

While the invention has been described by way of its preferred embodiments, it is to be understood that variations or modifications may be easily made by those skilled in the art without departing from the scope of this invention which is defined by the appended claims.

## Claims

1. A hose of a multilayer wall for conveying a hydrogen fuel in a fuel-cell vehicle, the hose comprising an innermost layer of a rubber material cured by an agent not containing any metal oxide and sulfur, and a hydrogen gas-impermeable metallic barrier layer formed in the wall surrounding the innermost layer.

2. The hose according to claim 1, wherein the material of the innermost layer satisfies at least one of the following requirements:
(1) hot water resistance;
(2) acid and/or alkali resistance; and
(3) an electric resistance of at least 10⁶ Ω · cm.

3. The hose according to claim 1, wherein the rubber material is selected from among ethylene-propylene-diene terpolymer rubber (EPDM), ethylene-propylene copolymer rubber (EPM), silicone-modified EPDM, silicone-modified EPM, fluororubber (FKM) and butyl rubber.

4. The hose according to claim 1, wherein the rubber material is EPDM or EPM cured by a peroxide without any zinc oxide.

5. The hose according to claim 1, wherein the barrier layer is a metal laminated layer formed by having a metal foil held between two resin films.

6. The hose according to claim 5, wherein the laminated layer is formed by at least a single fold of spiral winding or longitudinal lapping of a tape of a laminated sheet formed by having the foil held between the resin films.

7. The hose according to claim 1, wherein the wall has at least one of the following features:
(a) the barrier layer is in contact with the innermost layer;
(b) the barrier layer forms a part of the wall surrounding the innermost layer and is surrounded by a fiber-reinforced layer;
(c) the wall sequentially comprises the innermost layer, the barrier layer, an intermediate rubber layer, a fiber-reinforced layer and an outer rubber layer; and
(d) the innermost and barrier layers, or every two adjoining layers in the case of (b) or (c) above, are bonded to each other with an adhesive strength of at least 5 kgf/inch.

8. The hose according to claim 1, wherein the hose as a whole has an electric resistance of at least 10⁶ Ω · cm.

9. The hose according to claim 1, wherein the hose has its wall treated with an extraction medium under heat aging conditions so that any matter to be dissolved therefrom may be removed by extraction therefrom prior to use of the hose.

10. The hose according to claim 1, wherein the wall has its ends each connected with a stainless steel pipe, an inner surface of the wall being treated for adhesion to an outer surface of the stainless steel pipe and the inner and outer surfaces being fastened by a sleeve.

## Patentansprüche

1. Schlauch aus einer mehrschichtigen Wand zum Fördern eines Wasserstoffbrennstoffs in einem Brennstoffzellenfahrzeug, wobei der Schlauch eine innerste Schicht aus einem Gummimaterial aufweist, das mit einem weder Metalloxid noch Schwefel enthaltenden Agens vulkanisiert ist, und eine wasserstoffgasundurchlässige metallische Barriereschicht enthält, die in der die innerste Schicht umgebende Wand ausgebildet ist.

2. Schlauch nach Anspruch 1, wobei das Material der innersten Schicht mindestens eine der folgenden Erfordernisse erfüllt:
(1) Heißwasser-Beständigkeit;
(2) Säure- und/oder Alkalibeständigkeit; und
(3) einen elektrischen Widerstand von mindestens 10⁶ Ω · cm.

3. Schlauch nach Anspruch 1, wobei das Gummimaterial ausgewählt ist aus Ethylen/Propylen-Dien-Terpolymer-Gummi (EPDM), Ethylen/Propylen-Copolymer-Gummi (EPM), silikon-modifiziertes EPDM, silikon-modifiziertes EPM, Fluorogummi (FKM) und Butylgummi.

4. Schlauch nach Anspruch 1, wobei das Gummimaterial EPDM oder EPM ist, das mit einem Peroxid ohne jedes Zinkoxid vulkanisiert worden ist

5. Schlauch nach Anspruch 1, wobei die Barriereschicht eine Metallaminatschicht ist, die durch Halten einer Metallfolie zwischen zwei Harzfilmen ausgebildet wird.

6. Schlauch nach Anspruch 5, wobei die Laminatschicht aus mindestens einer einzigen Faltung einer Spiralwicklung oder einer Längsüberlappung eines Bandes einer Laminatlage ausgebildet wird, die durch Halten der Folie zwischen zwei Harzfilmen ausgebildet wird.

7. Schlauch nach Anspruch 1, wobei die Wand mindestens eines der folgenden Merkmale aufweist:
(a) die Barriereschicht ist in Kontakt mit der innersten Schicht;
(b) die Barriereschicht bildet einen Teil der die innerste Schicht umgebenden Wand und ist umgeben von einer faserverstärkten Schicht;
(c) die Wand enthält aufeinanderfolgend die innerste Schicht, die Barriereschicht, eine Gummizwischenschicht, eine faserverstärkte Schicht und eine äußere Gummischicht; und
(d) die innerste Schicht und die Barriereschicht oder je zwei benachbarte Schichten im oberen Fall (b) oder (c) sind aneinander mit einer Haftscherfestigkeit von mindestens 5 kgf/Zoll gebunden.

8. Schlauch nach Anspruch 1, wobei der Schlauch als ganzer einen elektrischen Widerstand von mindestens 10⁶ Ω · cm aufweist.

9. Schlauch nach Anspruch 1, wobei die Schlauchwand mit einem Extraktionsmedium unter Wärme-Alterungsbedingungen derart behandelt wird, daß jede Substanz, die hiervon extrahiert werden kann, durch Extraktion hiervon vor Gebrauch des Schlauchs entfernt werden kann.

10. Schlauch nach Anspruch 1, wobei die Wandenden jeweils mit einer Leitung aus nichtrostendem Stahl verbunden sind, eine Innenwandfläche zur Adhäsion mit einer Außenfläche der Leitung aus nichtrostendem Stahl behandelt wird und die inneren und äußeren Flächen mit einer Hülse befestigt sind.

## Revendications

1. Tuyau ayant une paroi à plusieurs couches pour transporter un carburant hydrogène dans un véhicule à pile à combustible, le tuyau comprenant une couche la plus interne faite d'une matière de type caoutchouc vulcanisée par un agent ne contenant pas d'oxyde métallique et de soufre, et une couche barrière métallique imperméable à l'hydrogène gazeux, formée dans la paroi entourant la couche la plus interne.

2. Tuyau selon la revendication 1, dans lequel la matière de la couche la plus interne satisfait au moins l'une des exigences suivantes :
(1) résistance à l'eau chaude ;
(2) résistance aux acides et/ou aux alcalis ; et
(3) une résistance électrique d'au moins 10⁶ Ω.cm.

3. Tuyau selon la revendication 1, dans lequel la matière de type caoutchouc est choisie parmi le caoutchouc terpolymère éthylène-propylène-diène (EPDM), le caoutchouc copolymère éthylène -propylène (EPM), l'EPDM modifié par silicone, l'EPM modifié par silicone, le caoutchouc fluoré (FKM) et le caoutchouc butyle.

4. Tuyau selon la revendication 1, dans lequel la matière de type caoutchouc est l'EPDM ou l'EPM vulcanisé par un peroxyde sans aucun oxyde de zinc.

5. Tuyau selon la revendication 1, dans lequel la couche barrière est une couche laminée métallique formée en ayant une feuille de métal maintenue entre deux films de résine.

6. Tuyau selon la revendication 5, dans lequel la couche laminée est formée par au moins une simple épaisseur d'enroulement en spirale ou de chevauchement longitudinal d'un ruban d'une feuille laminée formée en ayant la feuille maintenue entre les films de résine.

7. Tuyau selon la revendication 1, dans lequel la paroi a au moins l'une des caractéristiques suivantes :
(a) la couche barrière est en contact avec la couche la plus interne ;
(b) la couche barrière forme une partie de la paroi entourant la couche la plus interne et est entourée par une couche renforcée par des fibres ;
(c) la paroi comprend successivement la couche la plus interne, la couche barrière, une couche de caoutchouc intermédiaire, une couche renforcée par des fibres et une couche de caoutchouc externe ; et
(d) les couches la plus interne et barrière, ou tout ensemble de deux couches adjacentes dans le cas de (b) ou (c) ci-dessus, sont liées l'une à l'autre avec une forcé adhésive d'au moins 5 kgf/pouce.

8. Tuyau selon la revendication 1, dans lequel le tuyau dans son ensemble a une résistance électrique d'au moins 10⁶ Ω.cm.

9. Tuyau selon la revendication 1, dans lequel le tuyau a sa paroi traitée par un milieu d'extraction dans des conditions de vieillissement thermique, de telle sorte que toute matière devant être dissoute à partir de celle-ci peut être éliminée par extraction dans ledit milieu avant l'utilisation du tuyau.

10. Tuyau selon la revendication 1, dans lequel la paroi a ses extrémités connectées chacune à un tube en acier inoxydable, une surface interne de la paroi étant traitée en vue de l'adhésion à une surface externe du tube en acier inoxydable et les surfaces interne et externe étant fixées par un manchon.
